(19) **Europäisches Patentamt**
**European Patent Office**
**Office européen des brevets**

(11) **EP 2 940 114 B1**

(12) **EUROPEAN PATENT SPECIFICATION**

(45) Date of publication and mention
of the grant of the patent:
**02.01.2019 Bulletin 2019/01**

(51) Int Cl.:
*C11D 1/825* (2006.01)     *C09K 3/32* (2006.01)
*C09K 8/03* (2006.01)     *C11D 3/20* (2006.01)
*C11D 1/66* (2006.01)

(21) Application number: **15165357.3**

(22) Date of filing: **28.04.2015**

(54) **CLEANING COMPOSITION FOR USE AS DISPERSANT FOR OIL SPILLS OR AS SURFACE WASHING AGENT TO ENHANCE OIL REMOVAL FROM SUBSTRATES**

REINIGUNGSZUSAMMENSETZUNG ZUR VERWENDUNG ALS DISPERGIERMITTEL FÜR ÖLLACHEN ODER ALS OBERFLÄCHENWASCHMITTEL ZUR VERBESSERUNG DER ÖLBESEITIGUNG VON SUBSTRATEN

COMPOSITION DE NETTOYAGE DESTINÉE À ÊTRE UTILISÉE COMME DISPERSANT POUR LES DÉVERSEMENTS DE PÉTROLE OU COMME AGENT DE LAVAGE DE SURFACE POUR AMÉLIORER LE ÉLIMINATION D'HUILE À PARTIR DE SUBSTRATS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2014 IT FI20140101**

(43) Date of publication of application:
**04.11.2015 Bulletin 2015/45**

(73) Proprietor: **Cleaning Tech S.R.L.**
**50137 Firenze (FI) (IT)**

(72) Inventors:
• **Ciaralli, Fabrizio**
**00136 Roma (RM) (IT)**

• **Avezzano Comes, Francesca**
**55042 Forte dei Marmi (LU) (IT)**

(74) Representative: **Fanfani, Stefano**
**Fanfani S.R.L.**
**Via Giovanni Bovio 19**
**50136 Firenze (IT)**

(56) References cited:
WO-A1-00/49095     WO-A1-2004/044378
GB-A- 2 429 459     US-A- 5 753 127
US-A1- 2008 039 357

**Description**

FIELD OF THE INVENTION

The present invention relates to a concentrated chemical formulation effective as dispersant for crude oil spills in both salt and fresh water or as surface washing agent for removal of oil/hydrocarbons from contaminated surfaces.

STATE OF THE ART

The treatment and removal of accidental oil spills from sea water or from land areas and shorelines has long been a serious problem. While various mechanical devices have been designed to remove oil spread on the surface of water, the number of safe methods for removal of oil from land has been limited. Moreover, in affected areas, it is of vital importance to preserve the ecological balance so as not to destroy living organisms while cleaning oil contamination.
One of the technologies used for oil spill response includes the use of dispersants. Dispersants assist the natural process of the mechanical action of the sea that breaks down oil into small droplets dispersed and diluted by sea movement. They also reduce interfacial tension between oil and water creating a larger number of smaller droplets. This facilitates rapid dispersion and provides a greatly increased surface area that accelerates the degradation of the oil by micro-organisms. The dispersion of oil into water column will temporarily increase the hazard to water column and seabed resources including some important fishery interests. However, when used effectively, dispersants offer substantial protection to seabirds and mammals by removing oil from the surface of the sea. Their use can also protect coastline environments by disperding oil before it comes ashore.
Dispersants can also be effectively used to clean oiled surfaces to release the removed oil in a finely dispersed emulsified form into the receiving water bodies. Nevertheless, there is strong concern and opposition to the use of dispersants, based on the assumption that their use does not allow recovery of the oil and dispersing oil after cleaning reintroduces oil in the near shore environment. Though this assumption may have some validity, it is recognized that non-chemical procedures to clean rocks and shorelines have been found to be labor intensive, physically disruptive to the area and marginally effective.
Surface washing agents, also called surface cleaners or shoreline cleaning agents, are intended for use on walls and other structures. They are similar to dispersants in that they also promote the emulsification of oils in water, but they not prevent the coalescence or reaggregation of the oil droplets. They allow the oil to resurface so that it may be mechanically removed by booming and skimming operations. Therefore the oil that is washed away from the substrates can be removed and further contamination does not occur.
The patent EP1570155B1 discloses a process for the cleaning of oil wellbores using an aqueous surfactant composition and the patent US5753127A describes compositions and methods for dispersing spilled petroleum oils and fuels.
Aim of the present invention is to provide an improved and ecofriendly, or at least alternative, cleaning formulation of surfactants which can be used as dispersant or surface cleaner in case of accidental release of oil into a body of water -sea water or fresh water- as from a tanker, offshore drilling rig or underwater pipeline.

SUMMARY OF THE INVENTION

Both the above mentioned problems are effectively solved by the composition of the present invention that is a formulation of surfactants, which can be modulated in composition according to the required application; when used as a dispersant the formulation will include a specific crude oil emulsifying agent, whenever a surface cleaner application is required the formulation is deprived of the specific oil-in-water emulsifying surfactant and will be unable to give a stable emulsion or a stable dispersion of removed oil,
**[0009]**  In details, subject-matter of the present invention is a composition comprising:

(a) a $C_6$-$C_{14}$ alkylpolyglucoside (APG);
(b) a solvent system comprising at least one solvent selected in the group consisting of propylene glycol, ethylene glycol, ethylene glycol monobutyl ether, ethylene glycol monoethyl ether and water; wherein if the solvent system is composed by water only at least one alkaline metal halide is also present in solution;
(c) a narrow range C9-C11 ethoxylated alcohol, having 4EO - 6EO, Ethylene Oxide moles per mole of alcohol (C9-11 ethoxylated alcohol 4-6EO); and optionally further comprising
(d) a polyoxyethylene (also called PEG: PolyEthyleneGlycol) adduct to an hydrogenated vegetable oil, having from 20 to 100 ethylene oxide units, PEG(20-100), per mole of triester.

The composition above described is useful and high performing as dispersant or surface cleaner.

When both components (c) ethoxylated alcohol and (d) polyoxyethylene adduct are present then the composition can be more effectively used as *dispersant;* otherwise when the component (d) is absent the composition can be more effectively used as *surface cleaner.*

The *dispersant formulation,* results to be effective for dispersing spilled oil in both salt and fresh water.

The *surface cleaner formulation* consists of the same ingredients used in the dispersant formulation but deprived of the specified oil-emulsifying agent (d) which hence does not prevent the coalescence or reaggregation of the oil droplets. As consequence the removed oil, after being cleaned from the rock surfaces, maintains an intact cohesive volume and it allows the oil to resurface so that it can be mechanically removed by conventional booming or skimming equipment. This chemical cleaning has proven to be better than wash water alone or other conventional ways. Example formulations of the surface cleaner, deprived of the component (d), are reported in Table 3.

Furthermore compositions according to the invention were subject to biodegradability test in sea water, bioaccumulatlon evaluation through log p o/w determination, algal growth inhibition and toxicity tests on organism guide crustacean and icthic species resulting to have a low toxicity profile,

## DETAILED DESCRIPTION OF THE INVENTION

Short-chain alkylglucosides (averaging 10 to 12 carbon atoms) show wetting and detergency properties and are strong oil and fatty soil removers.

According to the invention preferably (a) APG is selected in the group consisting of $C_6$-$C_8$ alkylpolyglucoside; it is preferably selected in the group consisting of hexyl glycoside ($C_6G$) or octyl glucoside, linear or branched ($C_8G$ or $bC_8G$), or decyl glycoside, or lauryl glucoside, or an alkyl polyglucoside (APG) selected in the group consisting of APG0810, APGQ814 and APG1214.

The solvent mixture (b) is preferably selected from at least one of propylene glycol, ethylene glycol, ethylene glycol monobutyl ether and water; more preferably at least one of propylene glycol, ethylene glycol monobutyl ether and water.

It is also feasible to use only water, containing a soluble alkaline metal halide, as solvent; the inorganic salt enhances the effectiveness of the formulation in fresh and salt water by reducing the tendency of water to extract surfactants before they can be effective in oil.

According to the invention, the alkaline metal halide is preferably selected in the group consisting of NaCl, KCI and mixtures thereof.

Addition of alkali metal halide, most preferably sodium chloride, to the surface cleaner formulation, wherein the solvent is water, is made to improve two important dispersant requirements: (1) cold stability and (2) effectiveness in fresh or low salinity water. By providing the inorganic salt in surface cleaner formulation above both characteristics are improved: (1) product cloud point/freezing point becomes less than -10°C and (2) the formulation becomes less soluble in fresh water thereby retaining its effectiveness.

Preferred inorganic salt is sodium chloride in the range of 2%w/w - 15%w/w, preferably 10%w/w - 15%w/w.

According to the invention the narrow range C9-C11 ethoxylated alcohol (c) is an ethoxylated primary alcohol $C_9$-$C_{11}$ with >80% linearity, having 4EO-6EO, preferably 5.5EO, moles per mole of alcohol with an HLB-value of 10.5 - 12.5, preferably 11.5-12.

According to the invention, the vegetable oil is castor oil. More exactly the component (d) polyoxyethylene adduct to an hydrogenated vegetable oil is preferably PEG(20-40) hydrogenated castor oil and more preferably PEG-40 hydrogenated castor oil.

Both components APG (a) and narrow range C9-C11 ethoxylated alcohol (c) and mixture thereof are commercially available among the products named AG® and Berol® by AkzoNobel®. According to the invention APG (a) is preferably selected among AG® 6206, AG® 6202 and AG 6210; narrow range C9-C11 ethoxylated alcohol (c) is preferably Berol® 266; a mixture 50:50 of APG (a) and ethoxylated alcohol (c) is preferably Berol® DGR 81.

One example of a composition *%w/w composition* includes:

| | |
|---|---|
| (a) APG | 5-20 |
| (b1) propylene glycol | 0-50 |
| (b2) ethylene glycol monobutyl ether | 0-20 |
| (b3) water | 5-80 |
| (b4) alkaline metal halide | 0-15 |
| (c) C9-11 ethoxylated alcohol 4-6EO | 5-20 |
| (d) PEG hydrogenated castor oil | 0-25 |

wherein alkaline metal halide is present in solution if the solvent system is composed by water only.

According to the invention, a *preferred dispersant formulation* %w/w- includes:

| | |
|---|---|
| (a) hexyl-D-glucoside | 5-15 |
| (b1) propylene glycol | 0-40 |
| (b2) ethylene glycol monobutyl ether | 0-20 |
| (b3) water | 5-60 |
| (b4) alkaline metal halide | 0-10 |
| (c) C9-11 ethoxylated alcohol 5.5EO | 5-15 |
| (d) PEG-40 hydrogenated castor oil | 10-25 more preferably 20-25%; |

wherein alkaline metal halide is present in solution if the solvent system is composed by water only.

According to the invention, a *preferred surface cleaner formulation* %w/w-includes:

| | |
|---|---|
| (a) hexyl-D-glucoside | 5-20 |
| (b1) propylene glycol | 0-50 |
| (b2) ethylene glycol monobutyl ether | 0-10 |
| (b3) water | 20-80 |
| (b4) alkaline metal halide | 0-15 |
| (c) C9-11 ethoxylated alcohol 5.5EO | 5-20 |
| (d) PEG-40 hydrogenated castor oil | 0 |

wherein alkaline metal halide is present in solution if the solvent system is composed by water only.

Herein above and throughout the description the %w/w are referred to the total weight of the composition.

Composition according to the invention can be concentrated with %w/w as above described or diluted with water, salt or fresh water, up to 1:20.

A further subject-matter of the present invention is the use of a composition according to the invention as dispersant for oil spill or surface cleaner for sand, rock formations, shorelines, machinery, tanks, tankers or oil drilling equipment.

A further subject-matter of the present invention is a method for dispersing an oil layer spilled on sea water or fresh water, said method comprising contacting a composition according to the invention with said oil spilled in sea water or fresh water.

The *dispersant* composition can be contacted with the oil spill by way of spraying.

The amount of dispersant or its solution concentration required depends on the degree of oil type, its weathering and temperature and is ranging from 5 parts of dispersant per 100 parts of oil up to 1 part of dispersant per 1 part of oil; preferably from 10 parts of dispersant per 100 parts of oil to 20 parts of dispersant to 100 parts of oil.

A further subject-matter of the present invention is a method for cleaning of sand, rock formations, shorelines, but can be employed on other surfaces having a layer of oil deposited thereon such as machinery, tanks, tankers or oil drilling equipment. Above described surface cleaner formulations are effective as oil spill dispersants too if used in moderate rough sea conditions.

The *surface cleaner* or its solution can be applied to the oil deposited on surfaces by a spraying process. The surfactant solution which has been sprayed on the oil may typically remains in contact with the oil for a few minutes/hours until the cleaner has penetrated the oil. In the case of thin oil layers, the time for penetration could be very short. The amount of cleaner or its solution concentration required depends on the degree of type of oil, its weathering and temperature and is ranging from 5 parts of cleaner per 100 parts of oil up to 1 part of cleaner per 1 part of oil; preferably from 10 parts of cleaner per 100 parts of oil to 20 parts of cleaner to 100 parts of oil. Therefore subject-matter of the invention is a process for removing an oil layer on a contaminated substrate said substrate being sand, rocks, stones and other shoreline formations, machinery, tanks, tankers, oil drilling equipment or other oil contaminated substrates, said process comprising:

(i) contacting the oil layer with a sufficient amount of a cleaner according to a composition as above for a sufficient period of time comprised between 1 and 4 hours, enough for the cleaner to penetrate the oil;

(ii) washing, or spraying with water the oil and the composition from the surface;

(iii) collecting the mixture of water, oil and cleaner solution which has been washed from the surface;

(iv) removing the films or lenses of oil and surfactants from the surface of the body of water by absorption with oleophilic material or skimming or other mechanical or physico-chemical waste water treatment.

Contacting (i) is preferably performed by spraying.

EXPERIMENTAL SECTION

*EXAMPLE 1: DISPERSANT EFFECTIVENESS - Swirling separatory funnel test (*)*

(*) according to Italian Ministry of the Environment decree Feb. 25, 2011 -Annex 5; para 2.1, 2.1.1, 2.1.2 and para 2.2, 2.2.1

*Summary of Method*

Dispersant effectiveness is evaluated in terms of quantity of oil dispersed and emulsified after addition of dispersant under standard stirring conditions.
Stability of emulsified oil is also measured under standard stirring conditions.
Both dispersant effectiveness and emulsion stability are based on the determination of Hydrocarbon Oil Index (HOI) according to ISO 9377-2 (2002) standard method.

*Procedure*

a. Prepare a solution of dispersant and crude oil (i.e. Arabian Light or Arabian Heavy), mixing 1 part of dispersant together with 10 parts of crude oil;
b. Add 500 ml of synthetic sea salt water, prepared as per table below, in each of the 500 ml four separatory funnels (3 for replica testing and 1 for control testing);

| Synthetic sea salt water composition | |
|---|---|
| *Salt* | *Concentration (g/l)* |
| *NaCl* | 22 |
| $MgCl_2.6H_2O$ | 9.7 |
| $Na_2SO_4$ *(anidrous)* | 3.7 |
| $CaCl_2$ *(anidrous)* | 1.0 |
| *KCl* | 0.65 |
| $NaHCO_3$ | 0.20 |
| $H_3BO_3$ | 0.023 |

c. Measure and register water temperature (20±1°C);
d. Add 500 μl of the mixture dispersant+crude oil in the 3 replicas, and 500 μl of crude oil without dispersant in the control;

*Effectiveness evaluation*

e. Stir vigorously each separatory funnel for 2 minutes.
After stirring, take a 50 ml aliquot to determine the quantity of dispersed oil according to ISO 9377-2 (2002) method as above mentioned.

*Emulsion Stability evaluation*

f. Take from each funnel a further 100 ml aliquot to execute the evaluation of stability under stirring conditions;

g. Transfer the 100 ml aliquot into a 250 ml Erlenmeyer flask; shake with a Dubnoff shaker for 6 hrs at 67 OPM (oscillations/min.) and length stroke approx. 2 cm;

h. at the end of the six hours term, take a 50 ml aliquot from the bottom of Erlenmeyer flask and pour it into a 100 ml separatory funnel; then proceed to the dosing of mineral oils according to ISO 9377-2 (2002) method.

*Calculations*

*1. Effectiveness*

P = crude oil quantity in grams (g)
V = sample volume (0,5 liter)
C = crude oil initial concentration (g/l)
$p_1$ = dispersed crude oil (g) in the first aliquot (e.)
$v_1$ = volume of first aliquot (50 ml)
$c_1$ = dispersed crude oil concentration (g/l) in the first aliquot (50 ml)
*E% = Effectiveness of Dispersant Action*
C = (P:V) g/l

$$c_1 = (p_1:v_1) \times 1000 \text{ g/l}$$

$$E\% = (c_1:C) \times 100$$

*2. Stability of emulsion under standard stirring conditions*

$p_2$ = dispersed crude oil (g) in the second aliquot (h.)
$v_2$ = volume of second aliquot (100 ml) (g.)
$c_2$ = dispersed and emulsified crude oil concentration (g/l) in the second aliquot (100 ml)

$$c_2 = (p_2:v_2) \times 1000 \text{ g/l}$$

*S% = Stability under standard stirring conditions, i.e.: dispersed crude oil percentage at the end of stirring*

$$S\% = (c_2:c_1) \times 100$$

The following demonstrates the effectiveness of dispersant formulations of the present invention:

*Dispersant to Oil Ratio (DOR) 1:10 (by weight) temperature 20 °C*

| Tested formulation | light crude oil 31.8°API@60°F | | heavy crude oil 22.3°API@60°F | |
|---|---|---|---|---|
| | Effectiveness E % | Stability S % | Effectiveness E % | Stability S % |
| 1 | 77 | 91 | 79 | 91 |
| 2 | 69 | 89 | 72 | 90 |

Formulation 1: Concentrated water-dilutable, type2/type3 (**) oil spill dispersant containing %w/w:

7.5 of hexyl-D-glucoside,
7.5 of $C_9$-$C_{11}$ ethoxylated (5.5EO) alcohol,
25 of PEG(40) hydrogenated castor oil,
60 of solvent mixture of propylene glycol (35%), ethyleneglycol monobutylether (20%) and water (5%).

Formulation 2: Concentrated water-dilutable, type 2 (**) oil spill dispersant containing %w/w:

5 of hexyl-D-glucoside,
5 of C9 - C11 ethoxylated (5.5EO) alcohol,
20 of PEG(40) hydrogenated castor oil,
70 of solvent mixture of propylene glycol (22.5%), ethyleneglycol monobutylether (7.5%) and water (40%).

(**) as defined in appendix A to WSL Report 448 - MMO Approval and use of oil spill treatment products in UK

*EXAMPLE 2: SURFACE CLEANER - Rock Washing Test*

A Jar Test methodology was utilized to evaluate the effect of various surfactant blends for removing weathered crude oil from rocks. The oil coated rocks were prepared applying crude oil onto stone rounded pebbles 30-40 mm in size. Pebbles were immersed for 2 hours at room temperature in North Sea crude oil, then were extracted from oil and weathered in thermostatic oven at 50°C for 24 hours. Four pieces of oil-coated pebbles were placed in a jar tester (six paddle stirred), then 12 drops of various surfactant blends were added and allowed to soak for 1 hr. Next, 200 ml of sea water was gently added. The formulations tested and the observations made are summarized in the following Tables 1 and 2. It can be seen that the formulation 5 was the most effective wetting agent capable of cleaning viscous weathered oil from the rock surface.

*Table 1 - Summary of tested formulation*

| 1 | $C_6$-$C_{14}$ alkylpoglucoside 10% in water 90% |
|---|---|
| 2 | hexyl-D-glucoside (5%) + $C_9$-$C_{11}$ ethoxylated alcohol-5.5EO (5%) in water (90%) |
| 3 | hexyl-D-glucoside (15%) + $C_9$-$C_{11}$ ethoxylated alcohol-5.5EO (15%) in salt water (60% water, 10% sodium chloride) |
| 4 | hexyl-D-glucoside (7.5%) + $C_9$-$C_{11}$ ethoxylated alcohol-5.5EO (7.5%) in solvent mixture [propylene glycol (50%), ethylene glycol monobutyl ether (10%) and water (25%)] |
| 5 | hexyl-D-glucoside (20%) + $C_9$-$C_{11}$ ethoxylated alcohol-5.5EO (20%) in salt water (50% water, 10% sodium chloride) |

*Table 2 - Summary of Rock Washing Test*

| Surface Cleaner formulation | Observation after gentle addition of sea water |
|---|---|
| blank (just sea water) | no oil removal |
| 1 | little oil removal |
| 2 | good oil removal: no brown water |
| 3 | very good oil removal: brown water; good oil dispersion |
| 4 | good oil removal: brown water; not much dispersion |
| 5 | excellent oil removal: much brown water; very good oil dispersion |

The examples set forth are for illustrative purposes only and thus should not be construed to limit the scope of the present invention.
Example formulations of the present invention are described in the following *Table* 3 and can be prepared by conventional means. The order of mixing is not critical to the functioning of the composition.

*Table 3 - Formulations*

| Formulation (%w/w) | 1 | 2 | 3 | 4 | 5 | 6 | 7 | 8 | 9 | 10 |
|---|---|---|---|---|---|---|---|---|---|---|
| | *oil spill dispersant* | | | | | | *surface cleaner* | | | |
| hexyl-D-glucoside | 7.5 | 5.0 | 7.5 | 7.5 | 7.5 | 10.0 | 15.0 | 7.5 | 10.0 | 20.0 |
| $C_9$-$C_{11}$ ethoxylated (5.5EO) alcohol | 7.5 | 5.0 | 7.5 | 7.5 | 7.5 | 10.0 | 15.0 | 7.5 | 10.0 | 20.0 |

(continued)

| Formulation (%w/w) | 1 | 2 | 3 | 4 | 5 | 6 | 7 | 8 | 9 | 10 |
|---|---|---|---|---|---|---|---|---|---|---|
| | *oil spill dispersant* | | | | | | *surface cleaner* | | | |
| PEG(40) hydrogenated castor oil | 25.0 | 20.0 | 25.0 | 25.0 | 15.0 | 10.0 | -- | -- | -- | -- |
| propylene glycol | 35.0 | 22.5 | 40.0 | -- | -- | -- | -- | 50.0 | -- | -- |
| ethylene glycol monobutyl ether | 20.0 | 7.5 | 10.0 | -- | -- | -- | -- | 10.0 | -- | -- |
| water | 5.0 | 40.0 | 10.0 | 50.0 | 60.0 | 60.0 | 60.0 | 25.0 | 70.0 | 50.0 |
| sodium chloride (marine salt) | -- | -- | -- | 10.0 | 10.0 | 10.0 | 10.0 | -- | 10.0 | 10.0 |
| | | | | | | | | | | |
| Total | 100.0 | 100.0 | 100.0 | 100.0 | 100.0 | 100.0 | 100.0 | 100.0 | 100.0 | 100.0 |

The compositions according to the invention can be prepared in concentrated forms or in diluted, ready to use, forms. If the formulations according to the invention are prepared in concentrated form, as described in Table 3, they can be diluted up to 1:20 to the final desired volume with water, salt sea water or fresh water, prior to use. The formulations - concentrated or diluted - are easily applied by spraying or washing the oil contaminated surfaces.

ECOTOXYCOLOGICAL DATA

We previously mentioned that the ecotoxicity and the environmental impact of products for the control of the oil spills are issues of major concern to the authorities and are fundamental characteristics to be considered in the decision making process for their intended use. The chemical formulations of the present invention, to be used as oil spill dispersant or surface cleaner/surface washing agent, has undergone biodegradability test in sea water, bioaccumulation evaluation through log p o/w determination, algal growth inhibition and acute and chronic toxicity tests on organism guide crustacean and icthic species. Tests were made by a laboratory certified according to EN ISO 17025 standard. Results are reported in *Table 4* below and confirm that formulations according to the invention and subject to tests are generally less toxic than other available alternatives.

*Table 4 - Ecothoxicological Data*

| *TEST* | *formulation 7 of table 3* | *formulation 1 of table 3* | *Acceptance Criteria (*)* |
|---|---|---|---|
| Biodegradability [close bottle OECD 306 (1992)] | 98.0 % (28 days) | 98.1% (28 days) | > 60% ThOD |
| Bioaccumulation - log P o/w [OECD 107 (1995)] | -1.16 | -0.35 | ≤3 |
| Algal Growth Inhibition [*Phaeodactylum tricornutum*] - EC50 (72 hr) [EN ISO 10253:2006] | 57.96 mg/l | > 50 mg/l | > 10 mg/l high value = low toxicity |
| Acute crustacean toxicity [*Artemia franciscana*] - EC50 (96 hr) [APAT-IRSA-CNR 8060 (2003)] | 22.5 mg/l | 47.8 mg/l | > 10 mg/l high value = low toxicity |
| Acute fish toxicity [*Dicentrarchus labrax*] - EC50 (96 hr) [OECD 203 (1992)] | 56.6 mg/l | 51.5 mg/l | > 10 mg/l high value = low toxicity |
| | Solvent free. No water soluble solvents (i.e.: glycols) or other solvents are released in the environment. | | |
| (*) according to Italian Ministry of the Environment decree Feb. 25, 2011 - Annex 5; para 3, 4, 5 and 6. | | | |

**Claims**

1. A composition comprising:

   (a) a $C_6$-$C_{14}$ alkylpolyglucoside (APG);
   (b) a solvent system comprising at least one solvent selected in the group consisting of propylene glycol, ethylene glycol, ethylene glycol monobutyl ether, ethylene glycol monoethyl ether and water; wherein if the solvent system is composed by water only at least one alkaline metal halide is also present in solution;
   (c) a narrow range $C_9$-$C_{11}$ ethoxylated alcohol, having 4EO - 6EO, Ethylene Oxide moles per mole of alcohol (C9-11 ethoxylated alcohol 4-6EO);
   (d) a polyoxyethylene (also called PEG: PolyEthyleneGlycol) adduct to an hydrogenated vegetable oil, having from 20 to 100 ethylene oxide units per mole of triester wherein said vegetable oil is castor oil.

2. A composition according to claim 1 wherein (a) $C_6$-$C_{14}$ alkylpolyglucoside (APG) is selected in the group consisting of hexyl glucoside ($C_6$G) or octyl glucoside, linear or branched ($C_8$G or b$C_8$G), or decyl glucoside, or lauryl glucoside, or an alkyl polyglucoside (APG) selected in the group consisting of APG0810, APG0814 and APG1214.

3. A composition according to any one of claims 1-2 wherein solvent mixture (b) is preferably selected from at least one of propylene glycol, ethylene glycol, ethylene glycol monobutyl ether and water.

4. A composition according to any one of claims 1-3 wherein narrow range C9-C11 ethoxylated alcohol (c) is an ethoxylated primary alcohol $C_9$-$C_{11}$ with >80% linearity, having 4EO-6EO, preferably 5.5 EO moles per mole of alcohol, with an HLB-value of 10.5-12.5, more preferably 11.5-12.

5. A composition according to any one of claims 1-4 having the following %w/w referred to the total weight of the composition:

   | | |
   |---|---|
   | (a) $C_6$-$C_{14}$ alkylpolyglucoside (APG) | 5-20 |
   | (b1) propylene glycol | 0-50 |
   | (b2) ethylene glycol monobutyl ether | 0-20 |
   | (b3) water | 5-80 |
   | (b4) alkaline metal halide | 0-15 |
   | (c) C9-11 ethoxylated alcohol 4-6EO | 5-20 |
   | (d) PEG hydrogenated castor oil | 0-25 |

   wherein alkaline metal halide is present in solution if the solvent system is composed by water only.

6. A composition according to claim 5 having the following %w/w:

   | | |
   |---|---|
   | (a) hexyl-D-glucoside | 5-15 |
   | (b1) propylene glycol | 0-40 |
   | (b2) ethylene glycol monobutyl ether | 0-20 |
   | (b3) water | 5-60 |
   | (b4) alkaline metal halide | 0-10 |
   | (c) C9-11 ethoxylated alcohol 5.5EO | 5-15 |
   | (d) PEG-40 hydrogenated castor oil | 10-25 |

   wherein alkaline metal halide is present in solution if the solvent system is composed by water only.

7. Use of a composition according to any one of claims 1-6 as dispersant for oil spill.

8. A method for dispersing an oil layer spilled on sea water or fresh water, said method comprising contacting a composition according to any one of claims 1-7 with said oil spilled in sea water or fresh water.

9. A surface cleaner to enhance oil removal from sand, rock formations, shorelines, machinery, tanks, tankers or oil drilling equipment or a dispersant for oil spill consisting of:

(a) a $C_6$-$C_{14}$ alkylpolyglucoside (APG);
(b) a solvent system comprising at least one solvent selected in the group consisting of propylene glycol, ethylene glycol, ethylene glycol monobutyl ether, ethylene glycol monoethyl ether and water; wherein if the solvent system is composed by water only at least one alkaline metal halide is also present in solution;
(c) a narrow range $C_9$-$C_{11}$ ethoxylated alcohol, having 4EO - 6EO, Ethylene Oxide moles per mole of alcohol (C9-11 ethoxylated alcohol 4-6EO).

10. A surface cleaner or a dispersant according to the previous claim 9 wherein

(a) $C_6$-$C_{14}$ alkylpolyglucoside (APG) is selected in the group consisting of hexyl glucoside ($C_6$G) or octyl glucoside, linear or branched ($C_8$G or b$C_8$G), or decyl glucoside, or lauryl glucoside, or an alkyl polyglucoside (APG) selected in the group consisting of APG0810, APG0814 and APG1214.

11. A surface cleaner or a dispersant according to any one of claims 9 to 10 wherein solvent mixture (b) is preferably selected from at least one of propylene glycol, ethylene glycol, ethylene glycol monobutyl ether and water.

12. A surface cleaner or a dispersant according to any one of claims 9 to 11 wherein narrow range $C_9$-$C_{11}$ ethoxylated alcohol (c) is an ethoxylated primary alcohol $C_9$-$C_{11}$ with >80% linearity, having 4EO-6EO, preferably 5.5 EO moles per mole of alcohol, with an HLB-value of 10.5-12.5, more preferably 11.5-12.

13. A surface cleaner or a dispersant according to any one of claims 9 to 12 having the following %w/w referred to the total weight of the composition:

| | |
|---|---|
| (a) $C_6$-$C_{14}$ alkylpolyglucoside (APG) | 5-20 |
| (b1) propylene glycol | 0-50 |
| (b2) ethylene glycol monobutyl ether | 0-20 |
| (b3) water | 5-80 |
| (b4) alkaline metal halide | 0-15 |
| (c) C9-11 ethoxylated alcohol 4-6EO | 5-20 |

wherein alkaline metal halide is present in solution if the solvent system is composed by water only.

14. A surface cleaner or a dispersant according to claim 13 having the following %w/w referred to the total weight of the composition:

| | |
|---|---|
| (a) hexyl-D-glucoside | 5-20 |
| (b1) propylene glycol | 0-50 |
| (b2) ethylene glycol monobutyl ether | 0-10 |
| (b3) water | 20-80 |
| (b4) alkaline metal halide | 0-15 |
| (c) C9-11 ethoxylated alcohol 5.5EO | 5-20 |

wherein alkaline metal halide is present in solution if the solvent system is composed by water only.

15. A process for removing an oil layer on a contaminated substrate said substrate being sand, rocks, stones and other shoreline formations, machinery, tanks, tankers, oil drilling equipment or other oil contaminated substrates, said process comprising:

(i) contacting the oil layer with a sufficient amount of a surface cleaner according to any one of claims 9 to 14 for a sufficient period of time comprised between 1 and 4 hours, enough for the cleaner to penetrate the oil;
(ii) washing, or spraying with water the oil and the composition from the surface;
(iii) collecting the mixture of water, oil and cleaner solution which has been washed from the surface;
(iv) removing the films or lenses of oil and surfactants from the surface of the body of water by absorption with oleophilic material or skimming or other mechanical or physico-chemical waste water treatment.

**Patentansprüche**

1.  Zusammensetzung, umfassend:

    (a) ein $C_6$-$C_{14}$-Alkylpolyglucosid (APG);
    (b) ein Lösungsmittelsystem, umfassend mindestens ein Lösungsmittel, ausgewählt aus der Gruppe bestehend aus Propylenglykol, Ethylenglykol, Ethylenglykolmonobutylether, Ethylenglykolmonoethylether und Wasser; wobei mindestens ein Alkalimetallhalogenid ebenfalls in der Lösung vorhanden ist, wenn das Lösungsmittelsystem nur aus Wasser besteht;
    (c) einen ethoxylierten C9-C11-Alkohol im engen Bereich, aufweisend 4EO - 6EO, Ethylenoxid-Molen pro Mol Alkohol (C9-11 ethoxylierter Alkohol 4-6EO);
    (d) ein Polyoxyethylen (auch PEG genannt: Polyäthylen-Glykol) -Addukt zu einem hydrierten Pflanzenöl, aufweisend 20 bis 100 Ethylenoxideinheiten pro Mol Triester, wobei das Pflanzenöl Rizinusöl ist.

2.  Zusammensetzung nach Anspruch 1, wobei (a) $C_6$-$C_{14}$-Alkylpolyglucosid (APG) ausgewählt ist aus der Gruppe bestehend aus Hexylglucosid ($C_6$G) oder Octylglucosid, linear oder verzweigt ($C_8$G oder b$C_8$G), oder Decylglucosid oder Laurylglucosid, oder ein Alkylpolyglucosid (APG) ausgewählt aus der Gruppe bestehend aus APG0810, APG0814 und APG1214.

3.  Zusammensetzung nach einem der Ansprüche 1-2, wobei die Lösungsmittelmischung (b) vorzugsweise aus mindestens einem von Propylenglykol, Ethylenglykol, Ethylenglykolmonobutylether und Wasser ausgewählt ist.

4.  Zusammensetzung nach einem der Ansprüche 1-3, wobei der ethoxylierte Alkohol im engen Bereich $C_9$-$C_{11}$ (c) ein ethoxylierter primärer Alkohol $C_9$-$C_{11}$ mit >80% Linearität ist, aufweisend 4EO-6EO, vorzugsweise 5,5 EO-Molen pro Mol Alkohol, mit einem HLB-Wert von 10,5-12,5, vorzugsweise 11,5-12.

5.  Zusammensetzung nach einem der Ansprüche 1-4, aufweisend die folgenden % Gew./Gew., bezogen auf das Gesamtgewicht der Zusammensetzung:

    | | |
    |---|---|
    | (a) ein $C_6$-$C_{14}$-Alkylpolyglucosid (APG) | 5-20 |
    | (b1) Propylenglykol | 0-50 |
    | (b2) Ethylenglykolmonobutylether | 0-20 |
    | (b3) Wasser | 5-80 |
    | (b4) Alkalimetallhalogenid | 0-15 |
    | (c) C9-11 ethoxylierter Alkohol 4-6EO | 5-20 |
    | (d) PEG hydriertes Rizinusöl | 0-25, |

    wobei das Alkalimetallhalogenid in der Lösung vorhanden ist, wenn das Lösungsmittelsystem nur aus Wasser besteht.

6.  Zusammensetzung nach Anspruch 5, aufweisend die folgenden % Gew./Gew:

    | | |
    |---|---|
    | (a) Hexyl-D-glucosid | 5-15 |
    | (b1) Propylenglykol | 0-40 |
    | (b2) Ethylenglykolmonobutylether | 0-20 |
    | (b3) Wasser | 5-60 |
    | (b4) Alkalimetallhalogenid | 0-10 |
    | (c) C9-11 ethoxylierter Alkohol 5,5EO | 5-15 |
    | (d) PEG-40 hydriertes Rizinusöl | 10-25, |

    wobei das Alkalimetallhalogenid in der Lösung vorhanden ist, wenn das Lösungsmittelsystem nur aus Wasser besteht.

7.  Verwendung einer Zusammensetzung nach einem der Ansprüche 1-6 als Dispergiermittel für Öllachen.

**8.** Verfahren zum Dispergieren einer auf Meerwasser oder Süßwasser ausgetretenen Ölschicht, wobei das Verfahren das Kontaktieren einer Zusammensetzung nach einem der Ansprüche 1-7 mit dem im Meerwasser oder Süßwasser ausgetretenen Öl umfasst.

**9.** Oberflächenreiniger zur Verbesserung der Ölbeseitigung von Sand, Gesteinsformationen, Küstenlinien, Maschinen, Tanks, Tankwagen oder Ölbohrgeräten oder Dispergiermittel für Öllachen, bestehend aus:

(a) ein $C_6$-$C_{14}$-Alkylpolyglucosid (APG);
(b) ein Lösungsmittelsystem, umfassend mindestens ein Lösungsmittel, ausgewählt aus der Gruppe bestehend aus Propylenglykol, Ethylenglykol, Ethylenglykolmonobutylether, Ethylenglykolmonoethylether und Wasser; wobei mindestens ein Alkalimetallhalogenid ebenfalls in der Lösung vorhanden ist, wenn das Lösungsmittelsystem nur aus Wasser besteht;
(c) einem ethoxylierten C9-C11-Alkohol im engen Bereich, aufweisend 4EO - 6EO, Ethylenoxid-Molen pro Mol Alkohol (C9-11 ethoxylierter Alkohol 4-6EO).

**10.** Oberflächenreiniger oder Dispergiermittel nach dem vorhergehenden Anspruch 9, wobei (a) $C_6$-$C_{14}$-Alkylpolyglucosid (APG) ausgewählt ist aus der Gruppe bestehend aus Hexylglucosid ($C_6$G) oder Octylglucosid, linear oder verzweigt ($C_8$G oder b$C_8$G), oder Decylglucosid oder Laurylglucosid, oder ein Alkylpolyglucosid (APG) ausgewählt aus der Gruppe bestehend aus APG0810, APG0814 und APG1214.

**11.** Oberflächenreiniger oder Dispergiermittel nach einem der Ansprüche 9 bis 10, wobei die Lösungsmittelmischung (b) vorzugsweise aus mindestens einem von Propylenglykol, Ethylenglykol, Ethylenglykolmonobutylether und Wasser ausgewählt ist.

**12.** Oberflächenreiniger oder Dispergiermittel nach einem der Ansprüche 9 bis 11, wobei der ethoxylierte Alkohol im engen Bereich $C_9$-$C_{11}$ (c) ein ethoxylierter primärer Alkohol $C_9$-$C_{11}$ mit >80% Linearität ist, aufweisend 4EO-6EO, vorzugsweise 5,5 EO-Molen pro Mol Alkohol, mit einem HLB-Wert von 10,5-12,5, bevorzugter 11,5-12.

**13.** Oberflächenreiniger oder Dispergiermittel nach einem der Ansprüche 9 bis 12, aufweisend die folgenden % Gew./Gew, bezogen auf das Gesamtgewicht der Zusammensetzung:

| | |
|---|---|
| (a) ein $C_6$-$C_{14}$-Alkylpolyglucosid(APG) | 5-20 |
| (b1) Propylenglykol | 0-50 |
| (b2) Ethylenglykolmonobutylether | 0-20 |
| (b3) Wasser | 5-80 |
| (b4) Alkalimetallhalogenid | 0-15 |
| (c) C9-11 ethoxylierter Alkohol 4-6EO | 5-20, |

wobei das Alkalimetallhalogenid in der Lösung vorhanden ist, wenn das Lösungsmittelsystem nur aus Wasser besteht.

**14.** Oberflächenreiniger oder Dispergiermittel nach Anspruch 13, aufweisend die folgenden % Gew./Gew, bezogen auf das Gesamtgewicht der Zusammensetzung:

| | |
|---|---|
| (a) Hexyl-D-glucosid | 5-20 |
| (b1) Propylenglykol | 0-50 |
| (b2) Ethylenglykolmonobutylether | 0-10 |
| (b3) Wasser | 20-80 |
| (b4) Alkalimetallhalogenid | 0-15 |
| (c) C9-11 ethoxylierter Alkohol 5,5EO | 5-20, |

wobei das Alkalimetallhalogenid in der Lösung vorhanden ist, wenn das Lösungsmittelsystem nur aus Wasser besteht.

**15.** Verfahren zur Beseitigung einer Ölschicht auf einem kontaminierten Substrat, wobei das Substrat Sand, Felsen, Steine und andere Uferformationen, Maschinen, Tanks, Tankwagen, Ölbohrgeräte oder andere ölkontaminierte Substrate ist, wobei das Verfahren umfasst:

(i) Kontaktieren der Ölschicht mit einer ausreichenden Menge eines Oberflächenreinigers nach einem der Ansprüche 9 bis 14 für einen ausreichenden Zeitraum zwischen 1 und 4 Stunden, so dass der Reiniger in das Öl eindringen kann;
(ii) Waschen oder Besprühen des Öls und der Zusammensetzung mit Wasser von der Oberfläche;
(iii) Sammeln der Mischung aus Wasser, Öl und Reinigerlösung, die von der Oberfläche gewaschen wurde;
(iv) Beseitigen der Ölfilme oder -lachen und Tensiden von der Oberfläche des Wasserkörpers durch Absorption mit ölhaltigem Material oder Abschöpfen oder andere mechanische oder physikalisch-chemische Abwasserbehandlungen.

**Revendications**

1. Composition comprenant:

(a) un alkyl polyglucoside (APG) $C_6$-$C_{14}$;
(b) un système dissolvant comprenant au moins un dissolvant sélectionné parmi le groupe consistant en propylène glycol, éthylène glycol, éthylène glycol monobutyle éther, éthylène glycol monoéthyle éther et eau; où, si le système dissolvant n'est composé que d'eau, au moins un halogénure de métal alcalin est présent dans la solution;
(c) un alcool éthoxylé C9-C11 à bande étroite, ayant 4EO - 6EO moles d'oxide d'éthylène, par mole d'alcool (4-6EO alcool éthoxylé C9-11) ;
(d) un adduit de polyoxyethylène (également appelé PEG: *PolyEthyleneGlycol)*, adduit à un huile végétal hydrogéné, ayant 20 à 100 unités d'oxyde d'éthylène par mole de triester où ledit huile végétal est l'huile de ricin.

2. Composition selon la revendication 1 où (a) l'alkyl polyglucoside (APG) $C_6$-$C_{14}$ est sélectionné parmi le groupe consistant en hexyl glucoside ($C_6$G) ou octyl glucoside, linéaire ou branché ($C_8$G ou b$C_8$G) ou decyl glucoside ou lauryl glucoside ou un alkyl polyglucoside (APG) sélectionné parmi le groupe consistant en APG0810, APG0814 et APG1214.

3. Composition selon l'une quelconque des revendications 1-2 où le mélange dissolvant (b) est préférablement sélectionné parmi au moins une des substances propylène glycol, éthylène glycol, éthylène glycol monobutyle éther et eau.

4. Composition selon l'une quelconque des revendications 1-3 où l'alcool éthoxylé C9-C11 à bande étroite (c) est un alcool primaire éthoxylé $C_9$-$C_{11}$ avec une linéarité >80%, ayant 4EO-6EO, préférablement 5,5 EO moles para mole d'alcool, avec un valeur de HLB de 10,5-12,5, plus préférablement 11,5-12.

5. Composition selon l'une quelconque des revendications 1-4 ayant les valeurs en pourcent p/p rapportées au poids de la composition :

| | |
|---|---|
| (a) alkyl polyglucoside (APG) $C_6$-$C_{14}$ | 5-20 |
| (b1) propylène glycol | 0-50 |
| (b2) éthylène glycol monobutyle éther | 0-20 |
| (b3) eau | 5-80 |
| (b4) halogénure de métal alcalin | 0-15 |
| (c) 4-6EO alcool éthoxylé C9-11 | 5-20 |
| (d) huile de ricin hydrogéné PEG | 0-25 |

où l'halogénure de métal alcalin est présent dans la solution si le système dissolvant n'est composé que d'eau.

6. Composition selon la revendication 5 ayant les valeurs en pourcent p/p suivantes :

| | |
|---|---|
| (a) hexyl-D-glucoside | 5-15 |
| (b1) propylène glycol | 0-40 |
| (b2) éthylène glycol monobutyle éther | 0-20 |

(suite)

| | |
|---|---|
| (b3) eau | 5-60 |
| (b4) halogénure de métal alcalin | 0-10 |
| (c) 5,5EO alcool éthoxylé C9-11 | 5-15 |
| (d) huile de ricin hydrogéné PEG-40 | 10-25 |

où l'halogénure de métal alcalin est présent dans la solution si le système dissolvant n'est composé que d'eau.

**7.** Emploi d'une composition selon l'une quelconque des revendications 1-6 comme dispersant pour les déversements de pétrole.

**8.** Procédé pour éliminer une couche de pétrole déversée sur une surface d'eau salée ou d'eau douce, ledit procédé comprenant la mise en contact d'une composition selon l'une quelconque des revendications 1 à 7 avec ledit pétrole déversé sur l'eau salée ou eau douce.

**9.** Nettoyeur de surface pour améliorer l'élimination du pétrole de la sable, des formations rocheuses, des littoraux, des machineries, des réservoirs, des pétroliers ou des appareillages pour la perforation de puits de pétrole, ou un dispersant pour les déversements de pétrole comprenant :

(a) un alkyl polyglucoside (APG) $C_6$-$C_{14}$;
(b) un système dissolvant comprenant au moins un dissolvant sélectionné parmi le groupe consistant en propylène glycol, éthylène glycol, éthylène glycol monobutyle éther, éthylène glycol monoéthyle éther et eau; où, si le système dissolvant n'est composé que d'eau, au moins un halogénure de métal alcalin est présent dans la solution ;
(c) un alcool éthoxylé C9-C11 à bande étroite, ayant 4EO - 6EO moles d'oxyde d'éthylène, par mole d'alcool (4-6EO alcool éthoxylé C9-11).

**10.** Nettoyeur de surface ou dispersant selon la revendication 9 précédente où (a) l'alkyl polyglucoside (APG) $C_6$-$C_{14}$ est sélectionné parmi le groupe consistant en hexyl glucoside ($C_6G$) ou octyl glucoside, linéaire ou branché ($C_8G$ ou b$C_8G$), ou decyl glucoside ou lauryl glucoside ou un alkyl polyglucoside (APG) sélectionné parmi le groupe consistant en APG0810, APG0814 et APG1214.

**11.** Nettoyeur de surface ou dispersant selon l'une quelconque des revendications 9-10 où le mélange dissolvant (b) est préférablement sélectionné parmi au moins une des substances propylène glycol, éthylène glycol, éthylène glycol monobutyle éther et eau.

**12.** Nettoyeur de surface ou dispersant selon l'une quelconque des revendications 9-11 où l'alcool éthoxylé C9-C11 à bande étroite (c) est un alcool primaire éthoxylé $C_9$-$C_{11}$ avec une linéarité >80%, ayant 4EO-6EO, préférablement 5,5 EO moles par mole d'alcool, avec un valeur de HLB de 10,5-12,5, plus préférablement 11,5-12.

**13.** Nettoyeur de surface ou dispersant selon l'une quelconque des revendications 9-12 ayant les valeurs en pourcent p/p rapportées au poids de la composition :

| | |
|---|---|
| (a) alkyl polyglucoside (APG) $C_6$-$C_{14}$ | 5-20 |
| (b1) propylène glycol | 0-50 |
| (b2) éthylène glycol monobutyle éther | 0-20 |
| (b3) eau | 5-80 |
| (b4) halogénure de métal alcalin | 0-15 |
| (c) 4-6EO alcool éthoxylé C9-11 | 5-20 |

où l'halogénure de métal alcalin est présent dans la solution si le système dissolvant n'est composé que d'eau.

**14.** Nettoyeur de surface ou dispersant selon la revendication 13 ayant les valeurs en pourcent p/p suivantes :

| | |
|---|---|
| (a) hexyl-D-glucoside | 5-20 |

(suite)

| | |
|---|---|
| (b1) propylène glycol | 0-50 |
| (b2) éthylène glycol monobutyle éther | 0-10 |
| (b3) eau | 20-80 |
| (b4) halogénure de métal alcalin | 0-15 |
| (c) 5,5EO alcool éthoxylé C9-11 | 5-20 |

où l'halogénure de métal alcalin est présent dans la solution si le système dissolvant n'est composé que d'eau.

15. Procédé pour éliminer une couche de pétrole sur un substrat contaminé, ledit substrat étant des sables, des roches, des pierres ou d'autres formations littorales, des machineries, des réservoirs, des pétroliers, des appareillages pour la perforation de puits de pétrole ou d'autres substrats contaminés par le pétrole, ledit procédé comprenant :

(i) mettre à contact la couche de pétrole avec une quantité suffisante d'un nettoyeur de surface selon l'une quelconque des revendications 9 à 14 pendant une période de temps suffisante comprise entre 1 et 4 heures, de telle sorte à permettre au nettoyeur de pénétrer dans le pétrole ;
(ii) laver ou asperger avec de l'eau le pétrole et la composition à partir de la surface ;
(iii) ramasser le mélange d'eau, pétrole et solution nettoyante qui a été lavé à partir de la surface ;
(iv) éliminer les pellicules ou lentilles de pétrole et les tensioactifs de la surface du corps d'eau par absorption avec du matériel oléophilique ou par écrémage ou par tout traitement mécanique ou physicochimique des eaux noires.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1570155 B1

- US 5753127 A